# EUROPÄISCHE PATENTANMELDUNG

(11) **EP 3 581 524 A1**
(43) Veröffentlichungstag der Anmeldung: **18.12.2019**
(21) Anmeldenummer: 19177228.4
(22) Anmeldetag: 29.05.2019
(51) Int. Cl.: B65G 1/137

(54) **VERFAHREN UND VORRICHTUNG ZUM ERSTELLEN VON AUFTRÄGEN AUS EINZELWAREN**

(30) Priorität: 11.06.2018 DE 102018209268
(71) Anmelder: Dürkopp Fördertechnik GmbH, 33719 Bielefeld (DE)
(72) Erfinder: Völker, Sigurd, 32602 Vlotho (DE)
(74) Vertreter: Rau, Schneck & Hübner Patentanwälte Rechtsanwälte PartGmbB

(57) **Zusammenfassung**

Ein Verfahren zum Erstellen von Aufträgen aus Einzelwaren umfasst ein Fördern mindestens einer Einzelware (2) mittels jeweils einer Tragevorrichtung (7) zu einer Entladestation (12), ein auftragsorientiertes Entladen der mindestens einen Einzelware (2) von der Tragevorrichtung (7) an der Entladestation (12), ein Transportieren der mindestens einen Einzelware (2) eines Auftrags (18) zu einer Packstation (19).

## Beschreibung

Die vorliegende Patentanmeldung nimmt die Priorität der deutschen Patentanmeldung DE 10 2018 209 268.0 in Anspruch, deren Inhalt durch Bezugnahme hierin aufgenommen wird.

Die Erfindung betrifft ein Verfahren und eine Vorrichtung zum Erstellen von Aufträgen aus Einzelwaren.

Als Auftrag sind im Folgenden eine oder mehrere zusammengehörige Einzelwaren zu verstehen, die beispielsweise im Onlinehandel, dem sogenannten E-Commerce, eine Bestellung bilden. Entsprechende Aufträge können auch im Vertriebsbereich zwischen geschäftlichen Partner (B2B) gebildet werden. Dagegen sollen nicht als Aufträge Einzelwaren wie Umschläge oder Päckchen aus dem Postzustellbereich verstanden werden, die ein gemeinsames Zwischenziel betreffen.

In einer Hängeförderanlage können Einzelwaren in Tragevorrichtungen, insbesondere sogenannten Fördertaschen und insbesondere vereinzelt, gefördert werden. Die vereinzelte Förderung der Waren ermöglicht eine zielgerichtete Kommissionierung von Aufträgen. Zur Fertigstellung eines Auftrags werden die Fördertaschen zu Packplätzen gefördert. An den Packplätzen werden die Einzelwaren aus den Fördertaschen entnommen und zu Aufträgen gepackt. Die Hängeförderanlage kann bis zu 100 Packplätze oder mehr aufweisen. An jedem Packplatz ist eine Anlagen-Infrastruktur erforderlich wie beispielsweise zwei Weichen, zwei Steilförderer und ein Packplatzförderer mit Vereinzelung und Leseeinrichtung.

Es ist die Aufgabe der vorliegenden Erfindung, die Infrastruktur der Hängeförderanlage, insbesondere im Bereich der Packplätze, zu vereinfachen, insbesondere den Aufwand für die Infrastruktur und insbesondere den Platzbedarf für die Packplätze zu reduzieren .

Diese Aufgabe ist erfindungsgemäß gelöst durch ein Verfahren mit den im Anspruch 1 angegebenen Merkmalen sowie durch eine Vorrichtung mit den in Anspruch 7 angegebenen Merkmalen.

Erfindungsgemäß wurde erkannt, dass die Infrastruktur einer Hängeförderanlage, insbesondere im Bereich von Packplätzen, dadurch reduziert werden kann, dass ein Entladen von Tragevorrichtungen an einer Entladestation und damit getrennt von Packstationen erfolgt. Ein Entladen an den Packstationen ist entbehrlich, findet also nicht mehr statt. Der Infrastrukturaufwand an den Packstationen ist reduziert. Die Investitionskosten und insbesondere ein Raumbedarf und insbesondere ein Höhenbedarf im Bereich der Packstationen sind reduziert. Das Entladen erfolgt insbesondere automatisiert. Die Einzelwaren eines Auftrags werden an Entladestationen, insbesondere in Transportbehälter, abgegeben, die die Einzelwaren eines Auftrags in einen Packbereich mit mindestens einer Packstation transportieren. Insbesondere ist mindestens eine Entladestation vorgesehen. Insbesondere ist mindestens eine Packstation vorgesehen. Insbesondere besteht zwischen der mindestens einen Entladestation und der mindestens einen Packstation keine feste Zuordnung und keine feste Beziehung. Die mindestens eine Packstation ist insbesondere unabhängig von der mindestens einen Entladestation.

Vorzugsweise wird für den Transport ein Transportbehälter verwendet. Es ist auch ein Transport ohne Transportbehälter möglich. Beispielsweise ist eine Transportinfrastruktur vorgesehen, die zum unmittelbaren Transportieren der Einzelwaren geeignet ist wie beispielsweise ein Förderer, insbesondere ein Gurtförderer, auf dem die Einzelwaren direkt und ohne Transportbehälter transportiert werden können.

Wenn die Einzelwaren eines Auftrags das Transportvolumen des Transportbehälters übersteigen, können auch mehrere Transportbehälter eingesetzt werden. Um die Entladeleistung der Hängeförderanlage zu erhöhen, können mehrere Entladestationen vorgesehen sein, die insbesondere jeweils einer Sortiereinheit zugeordnet sind. Beispielsweise können zwischen drei und fünf oder mehr Entladestationen vorgesehen sein. Durch das Entladen der Einzelwaren an den Entladestationen entfällt die Infrastruktur an den Packstationen. Das Entladen findet zentralisiert statt.

An den Packstationen werden die Einzelwaren des Auftrags insbesondere versandfertig gepackt. Die Packstation kann im einfachsten Fall als Packtisch ausgeführt sein, zu dem die entladenen Einzelwaren von der Entladestation transportiert werden. Wesentlich ist, dass die Tragevorrichtungen der Hängefördertechnik nicht an jeder einzelnen Packstation ausgeschleust und dort auftragsorientiert gesammelt werden müssen. Die Packstationen sind von den Tragevorrichtungen der Hängeförderanlage entkoppelt. Zusätzlich oder alternativ zu dem Packen der Einzelwaren kann an der Packstation auch eine versandvorbereitende Handlung durchgeführt werden wie beispielsweise ein Schließen eines Versandbehältnisses, insbesondere eines Versandkartons, und/oder Anbringen, insbesondere Aufkleben, eines Versandetiketts. Zusätzlich oder alternativ können auch Mehrwertdienst-Handlungen, sogenannten value added services, an der Packstation durchgeführt werden. Mehrwertdienste sind beispielsweise Montage, Reparatur Retourwarenhandhabung, Qualitätskontrolle und/oder Sendungsverfolgung von Einzelwaren.

Es wurde erkannt, dass die fördertechnische Infrastruktur an einer Packstation der Hängeförderanlage, die insbesondere ein manuelles Entladen erfordert, eine reduzierte Durchsatzrate von beispielsweise 250 Einzelwaren pro Stunde in einem konventionellen Packplatzkonzept, also mit einem Entladen direkt am Packplatz, nicht vollständig ausgelastet ist, denn diese Packleistung ist kleiner und insbesondere deutlich kleiner als eine Lieferleistung, also die Durchsatzrate der transportierten und/oder geförderten Einzelwaren. Dadurch, dass die Einzelwaren an der Entladestation mit höherer, insbesondere mit erheblich höherer, Leistung als der möglichen Packleistung automatisch entladen werden können, entfällt in erheblichem Umfang die Hängefördertechnik an den Packstationen, wobei die Hängefördertechnik durch eine sehr unkompliziert ausgeführte Transporttechnik, insbesondere Behälterförderer, fahrerlose Transportsysteme und/oder manuelle Transportvehikel, ersetzt werden. Die Zugänglichkeit der Packstationen ist verbessert. Hierdurch ist es insbesondere möglich, weitere Einzelwaren zuzuführen und zuzusortieren, die aufgrund von Größe, Zerbrechlichkeit, Warenwert, Geometrie, insbesondere spitz zulaufender Kanten, oder anderen Eigenschaften nicht in den Tragevorrichtungen transportiert werden. Derartige Einzelwaren werden als nicht-taschenfähig bezeichnet. Die Zusortierung ist gegenüber dem Stand der Technik vereinfacht. Insbesondere muss gemäß dem Stand der Technik die Zusortierung mit derselben Frequenz erfolgen, mit der die Entladung der Einzelwaren an der Entladestation durchgeführt wird. Diese aufwändige Synchronisation ist bei dem vorliegenden Verfahren entbehrlich. Des Weiteren ist die Zusortierung durch die Reduktion der Hängefördertechnik vereinfacht, sodass der Zugang zu der Packstation verbessert ist.

Eine Erweiterung der Packbereiche, insbesondere die Anzahl der Packstationen, kann beispielsweise saisonal abhängig unkompliziert verändert werden. An der Entladestation erfolgt ein Umladen der Einzelwaren aus einer Transporttasche aus einer oder mehreren Tragevorrichtungen in einen oder mehrere Transportbehälter. Ein Kommissionieren an der Entladestation ist entbehrlich. Dadurch, dass die Einzelwaren eines Auftrags, insbesondere in dem Transportbehälter, fertig kommissioniert zu der Packstation transportiert werden, ist ein Kommissioniervorgang am Packplatz entbehrlich. Das Verfahren des Entladens der Einzelwaren aus den Tragevorrichtungen an den Entladestationen kann manuell, aber auch automatisiert und insbesondere vollautomatisiert durchgeführt werden.

Das erfindungsgemäße Verfahren und die erfindungsgemäße Vorrichtung ermöglichen ein vollautomatisches "Ware-zum-Mann-System". Das, insbesondere automatisierte, Entladen ermöglicht ein dynamisches Öffnen der Tragevorrichtungen. Dadurch, dass an der Packstation das Sammeln der Einzelwaren nicht erforderlich ist, ist ein aufwendiger Pufferbereich für Tragevorrichtungen an der Packstation zum Zwischenpuffern der aufgestauten Waren entbehrlich. Die Anzahl der Packstationen in einer derartigen Vorrichtung kann unkompliziert variiert werden, da keine Hängefördertechnik an den Packstationen erforderlich ist. Der Aufwand für die Infrastruktur und die Anlagentechnik ist insgesamt reduziert. Typischerweise umfasst ein Auftrag mehrere Einzelwaren. Ein Auftrag kann aber auch aus einer einzigen Einzelware bestehen.

Eine weitere Erkenntnis der Erfindung besteht darin, dass die Förderanlage für Einzelwaren einerseits und die Transportinfrastruktur für gesammelte Aufträge andererseits unterschiedlich ausgeführt sein können. Ziel der Förderanlage ist es, die Einzelwaren vereinzelt und insbesondere sortiert, zu der Entladestation zu fördern. Vorteilhaft ist es, wenn das Zeitintervall zwischen der ersten Einzelware eines Auftrags und der letzten Einzelware eines Auftrags an der Entladestation möglichst klein ist. Dadurch wird die Verweilzeit eines Transportbehälters an der Entladestation reduziert und insbesondere minimiert. Der Transportbehälter ist für neue Aufträge wieder schnell verfügbar. Entsprechend ist auch die Entladestation wieder schnell verfügbar, da die Entladestation blockiert ist, solange der Transportbehälter unterhalb von ihr angeordnet ist. Wenn der Transportbehälter schneller abtransportiert wird, ist die Entladestation schneller für neue Aufträge bereit. Die Auslastung der Anlage ist insgesamt erhöht.

Ziel der Transportinfrastruktur ist es, die Einzelwaren eines Auftrags auftragsbezogen gesammelt von der Entladestation zu den Packstationen zu transportieren. Dazu können mehrere Einzelwaren eines Auftrags in einem Transportbehälter angeordnet sein. Eine individuelle Zuordnung der Einzelwaren, insbesondere ein vereinzeltes Trennen der Einzelwaren, ist auf dem Transportweg von der Entladestation zu den Packstationen entbehrlich. Die Transportinfrastruktur kann vergleichsweise unkompliziert und robust ausgeführt sein. Vorteilhaft ist es, wenn die Transportinfrastruktur geeignet ist, einen Transportbehälter, in den die Einzelwaren in der Entladestation entladen werden, zu transportieren. Die Transportinfrastruktur kann aber auch ohne Transportbehälter ausgestattet sein, indem die Einzelwaren eines Auftrags beispielsweise unmittelbar auf ein Transportfahrzeug oder ein Förderband abgeladen werden.

Zudem wurde erkannt, dass die Trennung des Entladens von dem Packen der Einzelwaren eine flexible Gestaltung der Hängeförderanlage, insbesondere der Anordnung der Packstationen im Packbereich und insbesondere des Packbereichs insgesamt ermöglicht. Insbesondere ist das Layout des Packbereichs mit den Packstationen unabhängig von der Fördertechnik der Hängeförderanlage, also von der Hängefördertechnik. Die Anordnung und/oder die Anzahl von Packplätzen kann flexibel und insbesondere kurzfristig, an veränderte Anforderungen an die Hängeförderanlage angepasst werden. Veränderte Anforderungen können insbesondere bei der Handhabung von Einzelwaren im elektronischen Handel, der auch E-Commerce bezeichnet wird, auftreten. Eine bereits errichtete Hängeförderanlage, insbesondere deren Packbereich, kann nachträglich flexibel an geänderte Anforderungen angepasst werden. Insbesondere erfordert eine Veränderung des Layouts des Packbereichs keine Änderungen in der Abwicklung des Verfahrens.

Es ist insbesondere möglich, dass das Entladen der Tragevorrichtungen an der Entladestation erfolgt, während die Tragevorrichtungen entlang einer Transportrichtung transportiert werden. Dazu kann insbesondere in der Entladestation ein Entlade-Korridor definiert sein, innerhalb dessen das automatische Entladen der Tragevorrichtungen stattfindet. Die Länge des Entlade-Korridors ist insbesondere von der Transportgeschwindigkeit der Tragevorrichtungen und/oder von der Größe des Transportbehälters abhängig.

Ein Verfahren gemäß Anspruch 2 vereinfacht das auftragsorientierte Entladen der Tragevorrichtungen. Vorteilhaft ist, wenn der Zeitraum, in dem die Einzelteile eines Auftrags an der Entladestation ankommen, reduziert ist. Die Änderung der Reihenfolge zielt insbesondere darauf ab, den Zeitraum zu minimieren. Besonders vorteilhaft ist es, wenn die Einzelwaren eines Auftrags in einer Reihenfolge an der Entladestation angeliefert werden, also ohne dass auftragsfremde Einzelwaren in der Reihenfolge dazwischen angeordnet sind. Vorteilhaft ist es, wenn die Einzelwaren eines Auftrags gemeinsam angeliefert werden.

Ein Verfahren gemäß Anspruch 3 vereinfacht den Packprozess, indem die Einzelwaren des Transportbehälters ohne einen weiteren Kontrollschritt zu einem Auftrag zusammengefasst werden können. Es ist denkbar, dass die Einzelwaren eines Auftrags, insbesondere aus Platzgründen, auf mehrere Transportbehälter aufgeteilt werden. In diesem Fall werden die Transportbehälter mit den Einzelwaren eines Auftrags zu ein und demselben Packplatz transportiert.

Ein Verfahren gemäß Anspruch 4 ermöglicht eine zusätzliche Vereinfachung des Packprozesses, indem sämtliche Einzelwaren aus dem Transportbehälter zu dem versandfertigen Auftrag gepackt werden.

Ein Verfahren nach Anspruch 5 ermöglicht ein vereinfachtes Entladen der Einzelwaren. Die Tragevorrichtungen werden, insbesondere in einem Bodenbereich, geöffnet, sodass die Einzelwaren, insbesondere schwerkraftbedingt, herausfallen. Eine separate Handhabung der Tragetaschen, insbesondere ein Drehen oder Schwenken der Tragevorrichtung in eine Position derart, dass die Einzelware durch die Beladeöffnung herausfällt oder entnommen werden kann, ist nicht erforderlich. Der Anlagenaufwand, insbesondere für die Infrastruktur an der Entladestation, ist reduziert. Dadurch, dass das Entladen an der Entladestation automatisiert erfolgt, sind der Personaleinsatz und die Aufwendungen für Transportinfrastruktur zusätzlich reduziert.

Ein Verfahren gemäß Anspruch 6 vereinfacht das automatisierte Entladen der Tragevorrichtungen. Dadurch, dass die Einzelwaren automatisiert und insbesondere selbsttätig, insbesondere schwerkraftbedingt, aus der Tragevorrichtung entladen werden, ist der Entladeprozess schnell, unkompliziert und fehlersicher durchführbar.

Eine Vorrichtung gemäß Anspruch 8 gewährleistet das vorteilhafte, automatisierte Öffnen der Tragevorrichtungen, insbesondere mit einer hohen Durchsatzrate.

Eine Transportinfrastruktur gemäß Anspruch 9 vereinfacht die Entkopplung der Fördertaschen von den Packstationen. Besonders vorteilhaft ist ein autonomes Fahrzeug, das, insbesondere den Transportbehälter mit den Einzelwaren eines Auftrags von der Entladestation zu der Packstation transportiert. Ein autonomes Fahrzeug wird auch als fahrerloses Transportsystem, kurz FTS, oder als Automatic Guided Vehicle, kurz AGV, bezeichnet.

Zusätzlich oder alternativ kann die Transportinfrastruktur auch eine Behälterförderer, insbesondere einen Gurtförderer, auf den der Transportbehälter aufgestellt wird, und/oder einen Rollwagen, der manuell von der Entladestation zu der Packstation transportiert wird, umfassen.

Letztlich kommt es auf die Ausgestaltung der Transportinfrastruktur im Detail nicht an, solange eine zuverlässige transporttechnische Verbindung der Entladestation mit der Packstation gewährleistet ist, um insbesondere die mit den Einzelwaren eines Auftrags gefüllten Transportbehälter zuverlässig und unabhängig zu transportieren. Es ist insbesondere auch eine Transportinfrastruktur denkbar, die ohne Transportbehälter auskommt. Es ist beispielsweise denkbar, dass die Transportinfrastruktur als Gurtband ausgeführt ist, die durch Stege getrennte Zonen aufweisen kann.

Eine Vorrichtung gemäß Anspruch 10 gewährleistet, dass die Tragevorrichtungen entsprechend der Aufträge sortiert zu der Entladestation gefördert werden. Dabei ist die Sortierung der Einzelwaren innerhalb eines Auftrags insbesondere unerheblich. Wesentlich ist, dass sämtliche Einzelwaren eines Auftrags hintereinander, also insbesondere ohne dass Einzelwaren eines anderen Auftrags dazwischen angeordnet sind, zu der Entladestation gefördert werden. Es kann vorteilhaft sein, dass die Einzelwaren eines Auftrags auftragsintern derart sortiert werden, dass beispielsweise zunächst große und/oder schwere Einzelwaren zuerst in die Entladestation gefördert werden. Dadurch kann vermieden werden, dass beim schwerkraftbedingten, automatischen Entladen der Tragevorrichtungen es zu einer Beschädigung der Einzelwaren und/oder deren Verpackungen kommen kann.

Weitere Vorteile, zusätzliche Merkmale und Einzelheiten der Erfindung ergeben sich aus der nachfolgenden Beschreibung eines Ausführungsbeispiels anhand der Zeichnung. Es zeigen:
- Fig. 1: eine schematische Darstellung der erfindungsgemäßen Vorrichtung,
- Fig. 2: eine schematische Seitenansicht einer Entladestation der Vorrichtung gemäß Fig. 1.

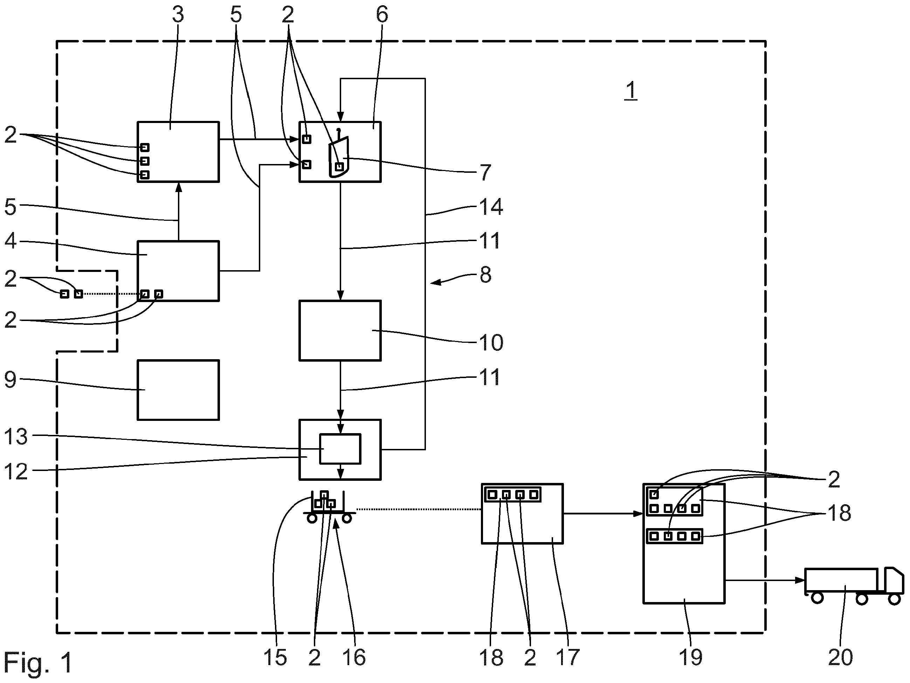

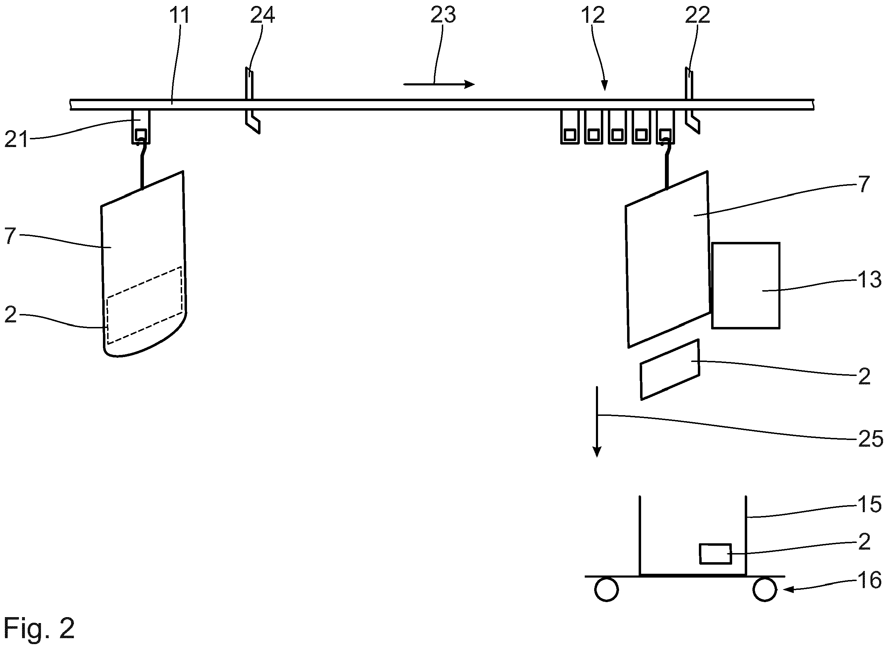

Eine in Fig. 1 und 2 als Ganzes mit 1 gekennzeichnete Vorrichtung, dient zum Fördern und/oder Transportieren von Einzelwaren 2. Die Vorrichtung 1 umfasst ein Warenlager 3, in dem die Einzelwaren 2 eingelagert sind. Das Warenlager 3 kann als manuelles Lager oder als automatisches Lager ausgeführt sein. Die Vorrichtung 1 weist ferner einen Wareneingang 4 auf, über den Einzelwaren 2 der Vorrichtung 1, insbesondere von extern, zugeführt werden können. Dem Wareneingang 4 können auch Retourenwaren zugeführt werden.

Der Wareneingang 4 ist mittels einer Fördertechnik 5 mit dem Warenlager 3 verbunden. Die Fördertechnik 5 ist beispielsweise ein Förderband oder eine manuelle Zubringung der Einzelwaren 2, die insbesondere auch in Gebinden im Wareneingang 4 vorliegen können, zu dem Warenlager 3.

Die Vorrichtung 1 umfasst ferner mindestens eine Aufgabestation 6, an der Einzelwaren 2 in eine Tragevorrichtung 7, die als Fördertasche ausgeführt ist, aufgegeben werden. Die Aufgabestation 6 ist sowohl mit dem Wareneingang 4 als auch mit dem Warenlager 3 jeweils unabhängig mittels einer Fördertechnik 5 verbunden. Mittels der Fördertechnik 5 können die Einzelwaren 2 von dem Warenlager 3 und/oder dem Wareneingang 4 zur Aufgabestation 6 gefördert werden.

Es ist auch eine Ausführung der Vorrichtung 1 ohne Fördertechnik zwischen der Aufgabestation 6 und dem Wareneingang 4 bzw. dem Warenlager 3 möglich. In diesem Fall können die Einzelwaren 2 von dem Wareneingang 4 und/oder dem Warenlager 3 manuell zu der Aufgabestation 6, insbesondere mittels Federbodenwagen oder Palettenhubwagen gefördert werden.

Vorteilhaft ist es, wenn die Tragevorrichtungen 7 jeweils mittels einer Identifikationseinrichtung eindeutig identifizierbar sind. Besonders bevorzugt ist es, wenn die Tragevorrichtung 7 mittels eines Rolladapters in einem Schienensystem einer Hängeförderanlage 8 geführt verlagerbar sind, wobei insbesondere der Rolladapter einen integrierten RFID-Chip aufweisen kann, der zur Speicherung der Identifikationsdaten verwendet werden kann.

Entlang der Hängeförderanlage 8 können die Tragevorrichtungen 7 hängend gefördert werden. Dazu weisen die Tragevorrichtungen 7 jeweils einen Haken auf, der in eine entsprechende Ausnehmung des Rolladapters einhängbar ist. An der Ausnehmung des Rolladapters kann auch ein Kleiderbügel mit einem daran hängenden Kleidungsstück gehängt werden. Insbesondere dient jede Tragevorrichtung 7 für die Förderung genau einer Einzelwaren 2.

Die Einzelwaren 2 weisen insbesondere jeweils eine Einzelwaren-Identifikationseinrichtung auf, über die die Einzelwaren 2 eindeutig identifizierbar sind, beispielsweise Kleidungsstücke anhand des Herstellers, des Artikels, der Größe, der Farbe usw... Die Identifikationsdaten der Tragevorrichtung 7 und der Einzelware 2, die mittels der Identifikationseinrichtung erfasst und an eine zentrale Steuerungseinheit 9 signaltechnisch übermittelt worden sind, werden in der Steuerungseinheit 9 datentechnisch miteinander verknüpft.

Einzelwaren 2 können während ihres Transports in der Hängeförderanlage 8 über entsprechend angeordnete Leseeinheiten entlang der Hängeförderanlage 8, die insbesondere die Position der Tragevorrichtungen 7 erfassen, eindeutig zugeordnet werden. Dadurch ist eine vereinzelte, gezielte Förderung der Einzelwaren 2 entlang der Hängeförderanlage 8 möglich.

Die Hängeförderanlage 8 umfasst eine Sortiereinheit 10, die zum Sortieren der Tragevorrichtungen 7, also zum Verändern der Reihenfolge der Einzelwaren 2 im Warenstrom, dient. Die Sortiereinheit 10 kann verschiedentlich ausgeführt sein. Die Sortiereinheit kann mehrere parallel und/oder in Reihe angeordnete Staustrecken und/oder einen oder mehrere Umlaufkreisel aufweisen. Zusätzlich oder alternativ kann die Sortiereinheit als Matrixsorter ausgeführt sein. Wesentlich ist, dass die Reihenfolge der Waren 2 im Warenstrom gezielt verändert werden kann.

Die Hängeförderanlage 8 umfasst ein Schienensystem 11, mittels dem die Tragevorrichtungen 7 von der Aufgabestation 6 zu der Sortiereinheit 10 und durch die Sortiereinheit 10 gefördert werden können. Das Schienensystem 11 dient auch zur fördertechnischen Verbindung der Sortiereinheit 10 mit mindestens einer Entladestation 12. Je Sortiereinheit 10 können mehrere, insbesondere drei oder fünf Entladestationen 12 vorgesehen sein. Insbesondere kann jede an die Sortiereinheit angeschlossene Entladestation 12 von jedem Umlaufkreisel der Sortiereinheit erreicht werden. Es ist insbesondere nicht erforderlich, dass die Einzelwaren der Aufträge in einzelnen Umlaufkreiseln und/oder Speicherbahnen gesammelt werden. Die Einzelwaren eines Auftrags könne beliebig in einer fördertechnisch verbundenen Sortiereinheit verteilt angeordnet sein. Die Entladestationen 12 sind der Sortiereinheit 10 zugeordnet. In der Entladestation 12 werden die mit jeweils einer Einzelware 2 beladenen Tragevorrichtungen 7 automatisiert geöffnet und entladen. Zum automatisierten Öffnen der Tragevorrichtungen 7 in der Entladestation 12 dient eine Öffnungseinheit 13.

Die in der Entladestation 12 entleerten Tragevorrichtungen 7 werden über eine Rückführstrecke 14 der Hängeförderanlage 8 zurückgeführt, mittels einer nicht dargestellten Schließeinheit geschlossen, also in ihren Ursprungszustand zurückversetzt, und beispielsweise an der Aufgabestation als Leertaschen zum Beladen mit Einzelwaren 2 zur Verfügung gestellt. Die entleerten Tragevorrichtungen 7 können auch in einem Leertaschen-Speicher, der nicht dargestellt ist, zwischengespeichert werden.

Die in der Entladestation 12 entladenen Einzelwaren 2 werden auftragsorientiert in einem Transportbehälter 15 gesammelt. Der Transportbehälter 15 wirkt mit einer Transportinfrastruktur 16 zusammen. Die Transportinfrastruktur 16 verbindet die Entladestation 12 mit einer Packstation 17. Die Transportinfrastruktur 16 ist gemäß dem gezeigten Ausführungsbeispiel als autonomes Fahrzeug ausgeführt, um den mit Einzelwaren 2 gefüllten Transportbehälter 15 zu der Packstation 17 zu transportieren. Es sind auch andere Ausgestaltungen für die Transportinfrastruktur 16 denkbar, wie beispielsweise ein schienengeführter Transportwagen, ein Gurt- oder BandFörderer und/oder ein manuell geführter Rollwagen. Über die Transportinfrastruktur 16 ist die Entladestation 12 mit der Packstation 17 gekoppelt. Insbesondere ist die Packstation 17 von der Hängeförderanlage 8 und den Tragevorrichtungen 7 entkoppelt.

Der Transportbehälter 15 ist geeignet mehrere Einzelwaren 2 aufzunehmen und von der Entladestation 12 zur Packstation 17 zu transportieren.

In der Packstation 17 werden die Einzelwaren zu einem versandfertigen Auftrag 18 gepackt.

Die Packstation 17 ist mit einem Warenausgang 19 fördertechnisch verbunden. Über den Warenausgang 19 können die Aufträge 18 mit den Einzelwaren 2 die Vorrichtung 1 verlassen. Die in der Vorrichtung 1 abgearbeiteten Aufträge 18 können unterschiedliche Artikel und unterschiedliche Anzahlen der Artikel aufweisen. Es ist auch denkbar, dass ein Auftrag 18 nur eine einzige Einzelware 2 aufweist. Aufträge 18 aus dem Warenausgang 19 können mittel externer Transportmittel 20, wie beispielsweise Lastkraftwagen, abtransportiert werden.

Nachfolgend wird anhand der Fig. 2 die Entladestation 12 näher erläutert.

Entlang des Schienensystems 11 der Hängeförderanlage 8 werden die an den Rolladaptern 21 hängend geförderten Tragevorrichtungen 7 zu der Entladestation 12 transportiert.

Im Bereich der Öffnungseinheit 13 ist eine Stoppervorrichtung 22 vorgesehen, die ein Stoppen der Tragevorrichtungen 7, insbesondere der Rolladapter 21, ermöglicht. Ein Fördern der Tragevorrichtungen 7 entlang der Transportrichtung 23 vorbei an der Stoppervorrichtung 22 ist dadurch zuverlässig verhindert. Gemäß dem gezeigten Ausführungsbeispiel ist die Stoppervorrichtung 22 als Stopperelement, das in einer Richtung quer und insbesondere senkrecht zur Transportrichtung 23 relativ zum Schienensystem 11 verlagerbar ist, ausgeführt.

Gemäß dem gezeigten Ausführungsbeispiel befinden sich in der Entladestation 12 fünf Tragevorrichtungen 7, wobei aus darstellerischen Gründen vorrangig die jeweiligen Rolladapter 21 dargestellt sind.

Stromaufwärts der Transportrichtung 23 ist an der Entladestation 12 ein Zubringerstopp 24 vorgesehen. Der Zubringerstopp 24 ist im Wesentlichen identisch wie die Stoppervorrichtung 22 in der Entladestation 12 ausgeführt. Der Zubringerstopp 24 verhindert eine unbeabsichtigte Förderung von Rolladaptern 21 mit Tragevorrichtungen 7 in die Entladestation 12. Der Zubringerstopp 24 kann auch entfallen.

Im Bereich der, insbesondere entlang der Transportrichtung 23 vorne angeordneten Tragevorrichtung 7 ist in der Entladestation 12 die Öffnungseinheit 13 angeordnet. Wenn in der Entladestation 12 mittels der aktivierten Stoppervorrichtung 22 die Tragevorrichtungen 7 aufgestaut sind, kann mittels der Öffnungseinheit 13 die jeweils am Weitertransport gehinderte Tragevorrichtung 7 entladen. Es ist auch denkbar, dass die Stoppervorrichtung 22 entfällt. Es ist grundsätzlich denkbar, dass die Tragevorrichtungen während eines Transports entlang der Transportrichtung 23 mittels der Öffnungseinheit 13 geöffnet werden. Die Einzelwaren werden in diesem Fall während des Weitertransports der Tragevorrichtungen 7 entladen.

Insbesondere weist die Tragevorrichtung 7 an einem unteren Ende einen Öffnungsmechanismus auf, der ein automatisches Öffnen der Tragevorrichtung 7 ermöglicht. Eine derartige Tragevorrichtung 7 in Form einer Fördertasche ist Gegenstand der deutschen Patentanmeldung 10 2018 201 675.5 der Patentanmelderin. Bezüglich des Aufbaus und der Funktionalität einer derartigen Tragevorrichtung und insbesondere des automatisierten Öffnens der Tragevorrichtung wird auf die DE 10 2018 201 675.5 ausdrücklich verwiesen.

Die Stoppervorrichtung 22 gibt die Entladeposition innerhalb der Entladestation 12 vor. Im Bereich der Entladeposition ist die Öffnungseinheit 13 angeordnet.

Die Stoppervorrichtung 22 kann auch entfallen. Die Entladeposition ist in diesem Fall als Entladebereich vorgegeben, der insbesondere durch einen Entlade-Korridor definiert ist. Der Entlade-Korridor ist entlang der Transportrichtung 23 definiert und weist einen Entlade-Startpunkt und einen in Transportrichtung 23 stromabwärts angeordneten Entlade-Endpunkt auf. Der Entlade-Korridor ist insbesondere so definiert, dass selbsttätig, in Folge der Schwerkraft aus der Tragevorrichtung herausfallende Einzelwaren in den an der Aufnahme-Position angeordneten Transportbehälter 15 fallen, also entladen werden. Der Abstand zwischen dem Entlade-Startpunkt und dem Entlade-Endpunkt entlang der Transportrichtung 23 ist insbesondere abhängig von der Transportgeschwindigkeit der Tragevorrichtungen 7.

Der Entladebereich und damit der Entlade-Startpunkt und der Entlade-Endpunkt sind an der Entladestation 12 angeordnet. In dem Entladebereich wird die Tasche geöffnet. Der Entladebereich ist insbesondere variabel ausgeführt und unterliegt Schwankungen. Der Entladebereich ist abhängig von der Transportgeschwindigkeit der Tragevorrichtung 7, einer Pendelbewegung der Tragevorrichtung 7 entlang und/oder quer zur Transportrichtung und/oder der Abgaberichtung, mit der die Einzelware auf der Tragevorrichtung 7 abgegeben wird. Insbesondere ist auch der vertikale Abstand der Tragevorrichtung 7 und der Transportinfrastruktur, insbesondere dem Transportbehälter, ausschlaggebend.

Ebenfalls im Bereich der Entladeposition ist an der Entladestation 12 der Transportbehälter 15 zur Aufnahme der entladenen Einzelwaren 2 angeordnet. Insbesondere ist der Transportbehälter 15 unterhalb der Tragevorrichtung 7, die sich jeweils in der Entladeposition befindet, angeordnet. Die Einzelwaren 2 können aus der, insbesondere in ihrem unteren Bereich, geöffneten Tragevorrichtung 7 selbststätig, insbesondere schwerkraftbedingt, herausfallen und unmittelbar in dem Transportbehälter 15 landen. Das Entladen erfolgt entlang der Entladerichtung 25. Es können auch zusätzliche Rutsch- oder Gleithilfen angeordnet sein, um ein geführtes und/oder gezieltes Überführen der Einzelware 2 aus der geleerten Tragevorrichtung 7 in den Transportbehälter 15 zu gewährleisten.

Der Transportbehälter 15 ist auf dem autonomen Fahrzeug als Teil der Transportinfrastruktur 16 angeordnet. Als Transportinfrastruktur 16 kann zusätzlich oder alternativ auch ein Gurtförderer oder ein anderes Transportmittel vorgesehen sein.

In Abhängigkeit der Anzahl der Einzelwaren können auch mehrere Transportbehälter 15 erforderlich sein, um sämtliche Einzelwaren 2 eines Auftrags 8 zu der Packstation 19 zu transportieren. Insbesondere erfolgt ein auftragsbezogener Sammeltransport der Einzelwaren 2 eines Auftrags 8 zu der Packstation.

## Patentansprüche

1. Verfahren zum Erstellen von Aufträgen aus Einzelwaren umfassend die Verfahrensschritte
- Fördern mindestens einer Einzelware (2) mittels jeweils einer Tragevorrichtung (7) zu einer Entladestation (12),
- auftragsorientiertes Entladen der mindestens einen Einzelware (2) von der Tragevorrichtung (7) an der Entladestation (12),
- Transportieren der mindestens einen Einzelware (2) eines Auftrags (18) zu einer Packstation (19).

2. Verfahren gemäß Anspruch 1, **dadurch gekennzeichnet, dass** die Reihenfolge der Einzelwaren (2) verändert wird, insbesondere die Einzelwaren (2) auftragsorientiert sortiert werden, bevor sie zu der Entladestation (12) gefördert werden.

3. Verfahren gemäß einem der vorstehenden Ansprüche, **dadurch gekennzeichnet, dass** in jedem Transportbehälter (15) nur Einzelwaren (2) eines Auftrags (18) angeordnet sind.

4. Verfahren gemäß einem der vorstehenden Ansprüche, **dadurch gekennzeichnet, dass** in jedem Transportbehälter (15) sämtliche Einzelwaren (2) eines Auftrags (18) angeordnet sind.

5. Verfahren gemäß einem der vorstehenden Ansprüche, **dadurch gekennzeichnet, dass** das Entladen durch ein Öffnen der Tragevorrichtung erfolgt.

6. Verfahren gemäß einem der vorstehenden Ansprüche, **dadurch gekennzeichnet, dass** zum automatisierten Entladen die Tragevorrichtung (7) automatisiert geöffnet wird und die Einzelware (2) selbsttätig, insbesondere schwerkraftbedingt, von der Tragevorrichtung (7) entladen wird.

7. Vorrichtung zum Erstellen von Aufträgen aus Einzelwaren, wobei die Vorrichtung umfasst
- mindestens eine Tragevorrichtung (7) zum vereinzelten Fördern einer Einzelware (2) entlang einer Förderanlage (8),
- eine mit der Förderanlage (8) verbundene Entladestation (12) zum automatisierten Entladen der mindestens einen Einzelware (2) eines Auftrags (18),
- eine Transportinfrastruktur (16) zum Transportieren der mindestens einen entladenen Einzelware (2).

8. Vorrichtung gemäß Anspruch 7, **dadurch gekennzeichnet, dass** die Entladestation (12) eine Öffnungseinheit (13) zum automatisierten Öffnen der mindestens einen Tragevorrichtung (7) aufweist.

9. Vorrichtung gemäß Anspruch 7 oder 8, **dadurch gekennzeichnet, dass** die Transportinfrastruktur (16) ein autonomes Fahrzeug aufweist.

10. Vorrichtung gemäß einem der Ansprüche 7 bis 9, **gekennzeichnet, durch** eine Sortiereinheit (10) zum auftragsorientierten Sortieren der Tragevorrichtungen (7).
